# EUROPEAN PATENT SPECIFICATION

(11) **EP 3 451 567 B1**
(45) Date of publication and mention of the grant of the patent: **04.08.2021**
(21) Application number: 16910200.1
(22) Date of filing: 29.07.2016
(51) Int. Cl.: H04L 1/16, H04L 1/18

(54) **METHOD OF FEEDING BACK ACK/NACK INFORMATION, TERMINAL EQUIPMENT, AND NETWORK EQUIPMENT**
VERFAHREN ZUR RÜCKKOPPLUNG VON ACK-/NACK-INFORMATIONEN, ENDGERÄTEAUSRÜSTUNG UND NETZWERKAUSRÜSTUNG
PROCÉDÉ DE RENVOI D'INFORMATIONS ACK/NACK, ÉQUIPEMENT TERMINAL ET ÉQUIPEMENT DE RÉSEAU

(43) Date of publication of application: 06.03.2019
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Guangdong 523860 (CN)
(74) Representative: Manitz Finsterwald Patent- und Rechtsanwaltspartnerschaft mbB
(86) International application number: PCT/CN2016/092359
(87) International publication number: WO 2018/018620

(56) References cited:
- EP-A2- 2 608 475
- WO-A1-2009/129713
- CN-A- 102 088 343
- CN-A- 104 125 045
- CN-A- 105 634 689
- US-B2- 9 078 250

## Description

### Technical Field

The present disclosure relates to the field of wireless communication, and more particularly to an Acknowledge (ACK) / Not Acknowledge (NACK) information feedback method, a terminal device and a network side device.

### Background

In a Long Term Evolution (LTE) system, a base station may transmit, to a terminal device, ACK/NACK information corresponding to uplink data transmitted by the terminal device through a Physical Hybrid Auto Repeat Request (ARQ) Indicator Channel (PHICH), and the terminal device may detect the ACK/NACK information on a corresponding PHICH resource. When the ACK/NACK information is fed back through the PHICH, the whole system bandwidth needs to be occupied, resulting in large bandwidth resource occupation and poor flexibility.

US 9078250 B2 provides a method and apparatus implementing channel quality control. EP 2608475 A2 provides a method and apparatus for transmitting uplink data in a wireless access system. However, the above mentioned problem still remains unsolved.

### Summary

The application provides an ACK/NACK information feedback method performed by a terminal device, an ACK/NACK information feedback method performed by a network side device, a terminal device and a network side device, which enables more flexible feedback of the ACK/NACK information to the terminal device. The features of the ACK/NACK information feedback method performed by a terminal device, the ACK/ NACK information feedback method performed by the network side device, the terminal device and the network side device according to the present disclosure are defined in the independent claims.

### Brief Description of the Drawings

For describing the technical solutions of embodiments of the present disclosure more clearly, the drawings adopted for illustrating the embodiments of the present disclosure will be simply introduced below. It is apparent that the drawings described below are only some embodiments of the present disclosure. Those of ordinary skill in the art may further obtain other drawings according to these drawings without creative work.
Fig. 1 is a schematic flowchart of an ACK/NACK information feedback method according to an embodiment of the present disclosure;
Fig. 2 is a schematic diagram of an ACK/NACK information feedback method according to an embodiment of the present disclosure;
Fig. 3 is a schematic diagram of an ACK/NACK information feedback method according to an embodiment of the present disclosure;
Fig. 4 is a schematic flowchart of an ACK/NACK information feedback method according to an embodiment of the present disclosure;
Fig. 5 is a schematic structure diagram of a terminal device according to an embodiment of the present disclosure;
Fig. 6 is a schematic structure diagram of a network side device according to an embodiment of the present disclosure;
Fig. 7 is a schematic structure diagram of a terminal device according to an embodiment of the present disclosure; and
Fig. 8 is a schematic structure diagram of a network side device according to an embodiment of the present disclosure.

### Detailed Description of the Embodiments

It is to be understood that the technical solutions in the embodiments of the present disclosure may be applied to multiple different communication systems, for example, a present communication system of a Global System of Mobile Communication (GSM), a Code Division Multiple Access (CDMA) system, a Wideband Code Division Multiple Access (WCDMA) system, a General Packet Radio Service (GPRS), an LTE system, a Universal Mobile Telecommunication System (UMTS) and the like, and may particularly be applied to a future 5th-Generation (5G) system.

In the embodiments of the present disclosure, a terminal device may refer to User Equipment (UE), an access terminal, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a future 5G network, a terminal device in a future evolved Public Land Mobile Network (PLMN) or the like. There are no limits made in the embodiments of the present disclosure.

In the embodiments of the present disclosure, a network side device may be a device configured to communicate with the terminal device. The network side device may be a Base Transceiver Station (BTS) in the GSM or the CDMA, or a NodeB (NB) in the WCDMA system, or an Evolutional Node B (eNB or eNodeB) in the LTE system, or a wireless controller in a Cloud Radio Access Network (CRAN) scenario. Alternatively, the network device may be a relay station, an access point, a vehicle-mounted device, or a wearable device. Alternatively, the network device may be a network side device in the future 5G network, a network side device in the future evolved PLMN or the like. There are no limits made in the embodiments of the present disclosure.

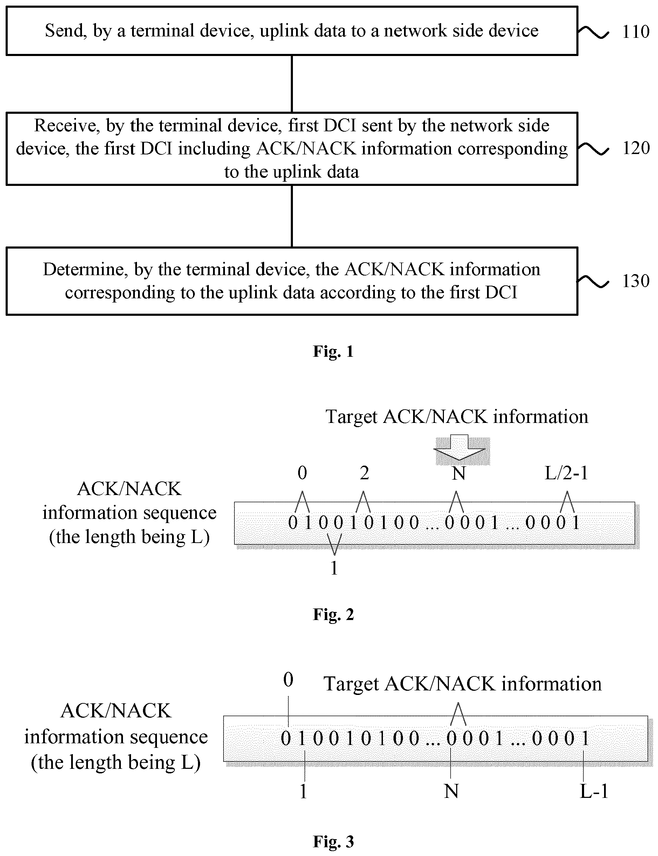

Fig. 1 is a schematic flowchart of an ACK/NACK information feedback method according to an embodiment of the present disclosure. The method includes the following operations in blocks shown in Fig. 1.

In block 110, a terminal device sends uplink data to a network side device.

After the terminal device sends the uplink data to the network side device, the network side device may detect the uplink data sent by the terminal device to determine ACK/NACK information corresponding to the uplink data.

In block 120, the terminal device receives first DCI sent by the network side device, the first DCI including the ACK/NACK information corresponding to the uplink data.

According to the method provided by the embodiment of the present disclosure, the ACK/NACK information is carried in the DCI, and the DCI may be transmitted on the whole system bandwidth and may alternatively be transmitted on part of bandwidth resources, so that the ACK/NACK information may be flexibly fed back.

The embodiment of the present disclosure may be applied to the following scenario. In the 5G mobile communication, UE may support multiple different types of basic parameter sets (numerology) in one carrier and FDM may be performed for data transmission based on different basic parameter sets. That is, the whole system bandwidth may be divided into multiple regions, each region corresponds to one basic parameter set and the uplink data is transmitted on the resource regions corresponding to different basic parameter sets respectively. For this scenario, the ACK/NACK information may be carried in the DCI, and the DCI may be transmitted on the whole system bandwidth and may alternatively be transmitted on part of bandwidth resources, so that the ACK/NACK information may be flexibly fed back.

It is to be understood that the ACK/NACK information in the embodiments of the present disclosure may be information for feedback about whether the network side device correctly detects the uplink data sent by the terminal device or not. The ACK/NACK information may be ACK information or NACK information. The ACK information indicates that the network side device correctly detects the uplink data sent by the terminal device. The NACK information indicates that the network side device does not correctly detect the uplink data sent by the terminal device and the terminal device is required to resend the uplink data to the network side device.

When the network side device correctly detects the uplink data sent by the terminal device, the uplink data corresponds to the ACK information and, in such a case, the first DCI includes the ACK information corresponding to the uplink data.

When the network side device does not correctly detect the uplink data sent by the terminal device, the uplink data corresponds to the NACK information and, in such a case, the first DCI includes the NACK information corresponding to the uplink data. Under this condition, the network side device may prompt the terminal device to resend the uplink data.

As an exemplary implementation, when the uplink data includes multiple transmission blocks (the multiple transmission blocks may be sent in one transmission and may alternatively be sent in multiple transmissions), the network side device may detect each transmission block sent by the terminal device. In such a case, the ACK/NACK information corresponding to the uplink data may include multiple bits and each bit is used for indicating a receiving condition of each transmission block for the network side device. The terminal device, after receiving the ACK/NACK information, determines whether each transmission block corresponds to an ACK or a NACK and, if a certain transmission block in the uplink data corresponds to a NACK, retransmits the transmission block.

It is to be understood that the first DCI includes an ACK/NACK information sequence formed by multiple pieces of ACK/NACK information and the ACK/NACK information sequence includes the ACK/NACK information corresponding to the uplink data.

In block 130, the terminal device determines the ACK/NACK information corresponding to the uplink data according to the first DCI.

In the embodiment of the present disclosure, the ACK/NACK information is carried in the DCI, so that the ACK/NACK information may be transmitted in an existing control channel resource, and there is no need to design an independent channel (PHICH) and allocate an independent physical resource for the ACK/NACK information in an LTE system, thereby increasing a resource utilization rate. In addition, a DCI transmission manner is more reliable than a PHICH transmission manner.

In at least one alternative embodiment, the multiple pieces of ACK/NACK information in the ACK/NACK information sequence may correspond to uplink data transmission of multiple terminal devices respectively, or, the multiple pieces of ACK/NACK information may alternatively correspond to multiple uplink data transmissions of the terminal device respectively. It is to be understood that the multiple terminal devices may correspond to at least one basic parameter set or the multiple uplink data transmissions of the terminal device may correspond to at least one basic parameter set.

When uplink data transmissions of the multiple terminal devices correspond to multiple basic parameter sets or multiple uplink data transmissions of a single terminal device correspond to multiple basic parameter sets, for uplink data for which different basic parameter sets are adopted and on which FDM is performed, the DCI may be sent only on a frequency-domain resource where the uplink data is located without occupying the whole system bandwidth, so that control channel design flexibility is improved and occupied bandwidth resources are reduced.

When the multiple pieces of ACK/NACK information in the ACK/NACK information sequence correspond to the uplink data transmission of the multiple terminal devices, each terminal device corresponds to one piece of ACK/NACK information in the ACK/NACK information sequence.

When the multiple pieces of ACK/NACK information in the ACK/NACK information sequence correspond to the multiple uplink data transmissions of the same terminal device respectively, all the ACK/NACK information in the ACK/NACK information sequence is for this terminal device and different ACK/NACK information is used for providing ACK/NACK feedback for different uplink data transmissions of the terminal device. For example, a length of the ACK/NACK information sequence is N, each piece of ACK/NACK information occupies 1 bit, then the ACK/NACK information sequence includes the ACK/NACK information corresponding to the previous N uplink data transmissions of the terminal device.

The ACK/NACK information sequence in the first DCI may contain ACK/NACK information corresponding to uplink data of the multiple terminal devices or ACK/NACK information corresponding to multiple uplink data transmissions of the same terminal device. The ACK/NACK information sequence may provide respective ACK/NACK information feedback to different terminal devices, or provide respective ACK/NACK information feedback for different uplink data to the same terminal device. Therefore, the resource utilization rate is increased and some unnecessary signaling overhead is reduced.

It is to be understood that any piece of ACK/NACK information in the multiple pieces of ACK/NACK information may correspond to uplink data transmission of only one terminal device. That is, one piece of ACK/NACK information may correspond to uplink data transmission of at most one terminal device. Uplink data transmission of one terminal device may correspond to one or more pieces of ACK/NACK information.

The first DCI may be DCI dedicated for transmitting the ACK/NACK information and, in such a case, the first DCI only includes the ACK/NACK information or the ACK/NACK information sequence. The first DCI may alternatively be DCI for other purposes, for example, DCI used for scheduling data transmission or DCI used for power control, and in such cases, the ACK/NACK information may be contained in the first DCI and transmitted together with other control information.

It is to be understood that, when the uplink data is uplink data sent by the terminal device in one transmission, the ACK/NACK information corresponding to the uplink data may be formed in a manner that one bit in the ACK/NACK information corresponds to the uplink data while other bits are set to be fixed values. Alternatively, each bit in the ACK/NACK information may correspond to the uplink data and, in such a case, each bit in the ACK/NACK information has the same value and is used for representing an ACK/NACK feedback of the uplink data. When the uplink data includes multiple transmission blocks, the ACK/NACK information corresponding to the uplink data may be formed in a manner that one bit in the ACK/NACK information corresponds to one transmission block or multiple transmission blocks of the uplink data. For example, when the uplink data includes two transmission blocks, the ACK/NACK information corresponding to the uplink data has 2 bits in total, then one bit of the ACK/NACK information may correspond to one transmission block and may alternatively correspond to two transmission blocks.

When the uplink data is uplink data sent by the terminal device in multiple transmissions, one bit of the ACK/NACK information corresponding to the uplink data may correspond to uplink data sent by the terminal device in one transmission, and may alternatively correspond to uplink data sent by the terminal device in multiple transmissions.

When one bit of the ACK/NACK information corresponds to multiple uplink data transmissions of the terminal device or corresponds to multiple transmission blocks of the uplink data, an AND operation may be executed on the ACK/NACK information corresponding to the multiple uplink data transmissions or the multiple transmission blocks of the uplink data to obtain one bit that can be adopted to represent an operational result. When information represented by the bit is ACK information, it is indicated that the multiple uplink data transmissions or the multiple transmission blocks of the uplink data are received by the network side device. When the information represented by the bit is NACK information, it is indicated that uplink data in at least one uplink data transmission among the multiple uplink data transmissions or at least one transmission block of the uplink data is not received by the network side device and, in such a case, the terminal device is required to resend the uplink data sent in the multiple uplink data transmissions or the multiple transmission blocks of the uplink data to the network side device.

According to the invention, the operation that the terminal device determines the ACK/NACK information corresponding to the uplink data according to the first DCI includes that: the terminal device determines position information of the ACK/NACK information corresponding to the uplink data; and the terminal device determines the ACK/NACK information corresponding to the uplink data according to the position information.

According to the invention, the terminal device determines the position information of the ACK/NACK information corresponding to the uplink data by adopting the following methods.

### A first method

The terminal device directly determines the position information of the ACK/NACK information corresponding to the uplink data according to indication information sent by the network side device. The indication information may be sent by the network side device before the first DCI is sent or at the same time when the first DCI is sent. In addition, the indication information may directly indicate the position information of the ACK/NACK information corresponding to the uplink data (for example, when the ACK/NACK information sequence includes eight pieces of ACK/NACK information in total, the indication information has 3 bits in total which indicates that the ACK/NACK information corresponding to the uplink data is third ACK/NACK information in the ACK/NACK information sequence), and the terminal device, after receiving the indication information, may directly determine the position information of the corresponding ACK/NACK information.

The indication information may be carried in RRC signaling or second DCI sent to the terminal device by the network side device. The second DCI may be DCI for the network side device to schedule the terminal device to send the uplink data.

### A second method

The terminal device determines the position information of the ACK/NACK information corresponding to the uplink data according to scheduling information of the uplink data. Herein, the scheduling information may be information for the network side device to schedule the terminal device to send the uplink data. The scheduling information may include at least one of: a CCE occupied by DCI used for scheduling the uplink data, a physical resource occupied by the uplink data, and DMRS configuration information of the uplink data.

When the position information of the ACK/NACK information corresponding to the uplink data is determined according to the scheduling information of the uplink data, an index of the ACK/NACK information corresponding to the uplink data of the terminal device in the ACK/NACK information sequence may be calculated according to an index of a first CCE occupied by the DCI used for scheduling the uplink data. The index of the ACK/NACK information corresponding to the uplink data in the ACK/NACK information sequence may alternatively be determined according to an index of a first Physical Resource Block (PRB) occupied by the uplink data. The index of the ACK/NACK information corresponding to the uplink data in the ACK/NACK information sequence may alternatively be determined according to a cyclic shift and Orthogonal Cover Code (OCC) configuration index of an uplink DMRS. The index used for indicating the PRB and information of the cyclic shift and OCC configuration index of the uplink DMRS may be contained in the DCI used for scheduling the uplink data.

According to the invention, when the position information is the index of the ACK/NACK information corresponding to the uplink data in the ACK/NACK information sequence (that is, the position information indicates a position of the ACK/NACK information corresponding to the uplink data in the multiple pieces of ACK/NACK information in the ACK/NACK information sequence), the terminal device determines the ACK/NACK information corresponding to the uplink data in the ACK/NACK information sequence according to the index and the number of bits in the ACK/NACK information occupied by each terminal device.

As an exemplary implementation, as shown in Fig. 2, the ACK/NACK information in the ACK/NACK information sequence corresponds to the uplink data transmission of the multiple terminal devices respectively, the number of bits occupied by each piece of ACK/NACK information is 2 and the index of the ACK/NACK information corresponding to the uplink data in the ACK/NACK information sequence (the length of which is L) is N. Then, the terminal, after receiving the ACK/NACK information sequence, sequences the multiple pieces of ACK/NACK information by taking 2 bits as a piece of ACK/NACK information, determines the Nth ACK/NACK information in the multiple pieces of ACK/NACK information as target ACK/NACK information and determines the target ACK/NACK information as the ACK/NACK information corresponding to the uplink data.

According to the invention, when the position information is an index of a first bit of the ACK/NACK information corresponding to the uplink data in all bits of the ACK/NACK information sequence, the terminal device determines the first bit of the ACK/NACK information corresponding to the uplink data in the ACK/NACK information sequence according to the index, and the terminal device determines remaining bits of the ACK/NACK information corresponding to the uplink data in the ACK/NACK information sequence according to the number of bits contained in the ACK/NACK information corresponding to the uplink data.

As an exemplary implementation, as shown in Fig. 3, the ACK/NACK information in the ACK/NACK information sequence corresponds to the uplink data transmission of the multiple terminal devices respectively, the number of bits occupied by each piece of ACK/NACK information is 2 and the index of the first bit of the ACK/NACK information corresponding to the uplink data in all the bits of the ACK/NACK information sequence is N. Then, the terminal, after receiving the ACK/NACK information sequence, sequences each bit in the ACK/NACK information sequence, finds the bit of which an index number is N therefrom, then finds the bit of which an index number is N+1, finally determines the ACK/NACK information containing the bits with the index numbers N and N+1 as the target ACK/NACK information and determines the target ACK/NACK information as the ACK/NACK information corresponding to the uplink data.

In at least one alternative embodiment, the number of bits contained in the ACK/NACK information corresponding to the uplink data may be determined according to a maximum number of transmission blocks supported by a single uplink transmission of the terminal device or according to a number of transmission blocks of the uplink data.

As an exemplary implementation, if the maximum number of transmission blocks supported by a single uplink transmission of the terminal device is A, the number of bits contained in the ACK/NACK information corresponding to the uplink data is [log2(A)] (i.e., an integer obtained by rounding log2(A)). If the number of the transmission blocks contained in the uplink data is B, the number of bits contained in the ACK/NACK information corresponding to the uplink data is [log2(B)] (i.e., an integer obtained by rounding log2(B)). It is to be understood that the number of the bits contained in the ACK/NACK information corresponding to the uplink data may be predetermined according to the maximum number of transmission blocks supported by a single uplink transmission of the terminal device. The number of the bits contained in the ACK/NACK information corresponding to the uplink data may be determined in real time according to the number of the transmission blocks contained in the uplink data. Therefore, the number of the bits contained in the ACK/NACK information may be flexibly regulated and the system resource utilization rate is increased.

In at least one alternative embodiment, the number of bits contained in the ACK/NACK information corresponding to the uplink data may be preset.

When the number of the transmission blocks contained in the uplink data is less than or equal to the number of the bits contained in the ACK/NACK information, one bit may be adopted to represent ACK/NACK information corresponding to one transmission block contained in the uplink data. When the number of the transmission blocks contained in the uplink data is larger than the number of the bits contained in the ACK/NACK information, one bit may be adopted to represent ACK/NACK information corresponding to multiple transmission blocks contained in the uplink data.

In at least one alternative embodiment, the first DCI may further include HARQ time sequence information and the HARQ time sequence information is used for indicating a HARQ retransmission time sequence of the uplink data. The HARQ retransmission time sequence of the uplink data may be the number of transmission time units existing between transmission time units adopted for HARQ retransmission of the uplink data and transmission time units adopted for transmitting the ACK/NACK information of the uplink data. Herein, a transmission time unit is a basic time-domain unit for data transmission, for example, a subframe, an Orthogonal Frequency Division Multiplexing (OFDM) symbol, a radio frame and a timeslot.

It is to be understood that the first DCI may include retransmission time sequence information of all the transmission blocks of the uplink data and the terminal device, after receiving the ACK/NACK information corresponding to the uplink data, retransmits one or more transmission blocks corresponding to the NACK information in the uplink data according to the HARQ time sequence information. As an exemplary implementation, the first DCI may include HARQ time sequence information of the part of transmission blocks that need to to be retransmitted in the uplink data only and, in such a case, the terminal device retransmits the transmission blocks of this part according to the HARQ time sequence information.

In at least one alternative embodiment, a CRC code of the first DCI may be scrambled based on a public RNTI. As an exemplary implementation, the network side device may determine a scrambling sequence of the CRC code according to the public RNTI, thereby scrambling the CRC code to improve reliability of the first DCI in a transmission process. The terminal device may alternatively determine the scrambling sequence of the CRC code according to the public RNTI so that the terminal device, after receiving the first DCI, may accurately acquire the ACK/NACK information corresponding to the uplink data from the first DCI. The public RNTI may be a C-RNTI, may alternatively be a known RNTI such as a TPC-PUSCH-RNTI.

In at least one alternative embodiment, when the ACK/NACK information corresponding to the uplink data is the NACK information, the terminal device performs HARQ retransmission for the uplink data. It is to be understood that, when all the transmission blocks of the uplink data correspond to the NACK information, the terminal device retransmits all the transmission blocks of the uplink data; and when part of transmission blocks of the uplink data correspond to the NACK information, the terminal device retransmits this part of transmission blocks contained in the uplink data. When the uplink data is retransmitted, the uplink data may be retransmitted according to the time sequence indicated by the HARQ time sequence information sent by the network side device.

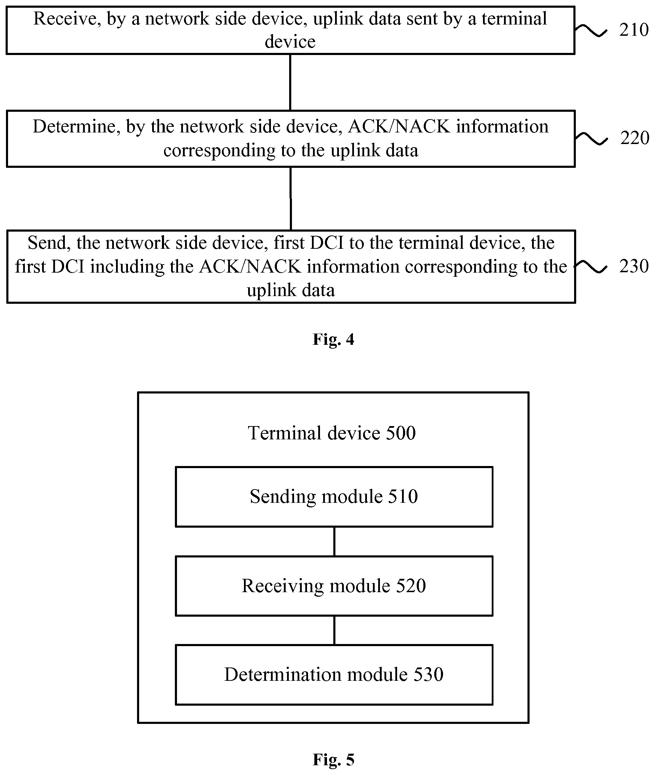

The ACK/NACK information feedback method in the embodiments of the present disclosure is described above from the perspective of the terminal device in combination with Fig. 1 to Fig. 3 in detail. The ACK/NACK information feedback method in the embodiments of the present disclosure will be described below from the perspective of the network side device in combination with Fig. 4. It is to be understood that descriptions about the terminal device and the network side device correspond to each other and thus the parts not described in detail may refer to the embodiments shown in Fig. 1 to Fig. 3.

Fig. 4 is a schematic flowchart of an ACK/NACK information feedback method according to an embodiment of the present disclosure. The method includes the following operations in blocks shown in Fig. 4.

In block 210, a network side device receives uplink data sent by a terminal device.

In block 220, the network side device determines ACK/NACK information corresponding to the uplink data.

In block 230, the network side device sends first DCI to the terminal device, the first DCI including the ACK/NACK information corresponding to the uplink data.

In the embodiment of the present disclosure, the ACK/NACK information is carried in the DCI and the ACK/NACK information corresponding to the uplink data may be fed back to the terminal device on the whole system bandwidth or part of the bandwidth, which is more flexible compared with a manner that the whole system bandwidth is required to be occupied to feed back the ACK/NACK information on a PHICH in an LTE system. In addition, under the condition that there are few terminal devices, only part of the bandwidth may be occupied to feed back the ACK/NACK information, so that occupied bandwidth resources may be reduced. Moreover, compared with the PHICH, a coding manner and modulation manner of the DCI are more reliable.

According to the invention, the first DCI includes an ACK/NACK information sequence, the ACK/NACK information sequence is formed by multiple pieces of ACK/NACK information and the ACK/NACK information sequence includes the ACK/NACK information corresponding to the uplink data.

In at least one alternative embodiment, the multiple pieces of ACK/NACK information correspond to uplink data transmission of multiple terminal devices respectively, and the uplink data transmission of the multiple terminal devices corresponding to at least one basic parameter set; alternatively, the multiple pieces of ACK/NACK information correspond to multiple uplink data transmissions of the same terminal device respectively, and the multiple uplink data transmissions of the terminal device corresponding to at least one basic parameter set.

When uplink data transmissions of the multiple terminal devices correspond to multiple basic parameter sets or multiple uplink data transmissions of a single terminal device correspond to multiple basic parameter sets, for uplink data for which different basic parameter sets are adopted and on which FDM is performed, the DCI may be sent only on a frequency-domain resource where the uplink data is located without occupying the whole system bandwidth, so that control channel design flexibility is improved and occupied bandwidth resources are reduced.

In at least one alternative embodiment, the method may further include that: the network side device sends indication information to the terminal device, the indication information being used for indicating position information of the ACK/NACK information corresponding to the uplink data.

The network side device directly indicates the position information of the ACK/NACK information corresponding to the uplink data through the indication information, so that the terminal device may directly determine the ACK/NACK information corresponding to the uplink data according to the indication information.

In at least one alternative embodiment, the indication information is carried in RRC signaling or second DCI sent to the terminal device by the network side device, the second DCI being DCI used for scheduling the uplink data.

The indication information may be carried in other information sent to the terminal device by the network side device, so that the terminal device may conveniently acquire the indication information.

In at least one alternative embodiment, the method may further include that: the network side device sends scheduling information of the uplink data to the terminal device to enable the terminal device to determine the position information of the ACK/NACK information corresponding to the uplink data according to the scheduling information, the scheduling information of the uplink data including at least one of: a CCE occupied by DCI used for scheduling the uplink data, a physical resource occupied by the uplink data, and DMRS configuration information of the uplink data.

The terminal device may alternatively indirectly determine, through scheduling information, the position information of the ACK/NACK information corresponding to the uplink data.

In at least one alternative embodiment, the number of bits contained in the ACK/NACK information corresponding to the uplink data is determined according to a maximum number of transmission blocks supported by a single uplink transmission of the terminal device or according to a number of transmission blocks contained in the uplink data.

In at least one alternative embodiment, the number of the bits contained in the ACK/NACK information corresponding to the uplink data is preset.

In at least one alternative embodiment, the number of the bits contained in the ACK/NACK information corresponding to the uplink data is larger than the number of the transmission blocks contained in the uplink data, first-type bits contained in the ACK/NACK information corresponding to the uplink data are used for indicating ACK/NACK information corresponding to transmission blocks contained in the uplink data, and other bits, except the first-type bits, contained in the ACK/NACK information corresponding to the uplink data are fixed values or values same as values of the first-type bits.

In at least one alternative embodiment, the DCI may further include HARQ time sequence information and the HARQ time sequence information is used for indicating a HARQ retransmission time sequence of the uplink data.

The ACK/NACK information feedback method in the embodiments of the present disclosure will be introduced below in combination with exemplary examples in detail.

### A first example

In 301, N terminal devices send uplink data to a network side device on a subframe n through an orthogonal resource.

In 302, the network side device detects the uplink data sent by the N terminal devices and determines ACK/NACK information corresponding to the uplink data sent by each terminal device. The number of bits contained in the ACK/NACK information corresponding to the uplink data sent by each terminal device is fixed to 2. When the uplink data sent by each terminal device includes two transmission blocks, each bit in the ACK/NACK information corresponds to one transmission block of the uplink data. When the uplink data sent by each terminal device includes only one transmission block, the first bit of the ACK/NACK information corresponds to the transmission block of the uplink data and the second bit of the ACK/NACK information is set to be 0 as a default.

In 303, the network side device sends DCI including an ACK/NACK information sequence to the N terminal devices on a subframe n+k (k is an integer larger than 1 and a value of k may be 3-6). The ACK/NACK information sequence in the DCI is formed by N pieces of ACK/NACK information. The number of the bits contained in each piece of ACK/NACK information is 2 and the N pieces of ACK/NACK information correspond to uplink data transmission of the N terminal devices respectively.

In 304, the N terminal devices receive the DCI.

In 305, the N terminal devices determine the ACK/NACK information corresponding to the respectively sent uplink data in the ACK/NACK information sequence in the DCI respectively. The network side device may indicate an index value m of the ACK/NACK information corresponding to the uplink data sent by each terminal device in the ACK/NACK information sequence in advance through high-layer signaling (for example, RRC signaling) to enable each terminal device to determine the ACK/NACK information corresponding to the terminal device itself in the ACK/NACK information sequence according to the index value m.

In 306, the N terminal devices performs subsequent uplink data transmission according to the corresponding ACK/NACK information respectively. For example, when the ACK/NACK information received by a certain terminal device is NACK information, the terminal device performs HARQ retransmission for the uplink data on a subframe n+k+4.

The condition that the ACK/NACK information in the ACK/NACK information sequence corresponds to the uplink data of different terminal devices respectively is introduced in the first example. The condition that the ACK/NACK information in the ACK/NACK information sequence corresponds to multiple uplink data transmission blocks sent by the same terminal device will be introduced below in combination with a second example in detail.

### The second example

In 401, a terminal device sends N uplink data transmission blocks to a network side device on a subframe n respectively.

In 402, the network side device detects the N uplink data transmission blocks sent by the terminal device and determines ACK/NACK information corresponding to each uplink data transmission block. Each data transmission block corresponds to one piece of ACK/NACK information and each piece of ACK/NACK information occupies one bit.

In 403, the network side device sends DCI including an ACK/NACK information sequence to the terminal device. The ACK/NACK information sequence includes N pieces of ACK/NACK information and each piece of ACK/NACK information occupies one bit. The N pieces of ACK/NACK information correspond to the N uplink data transmission blocks sent by the terminal device respectively. The N pieces of ACK/NACK information are sequenced in the ACK/NACK information sequence according to a transmission sequence of the N uplink data transmission blocks.

In 404, the terminal device receives the DCI.

In 405, the terminal device determines, in the DCI, the ACK/NACK information corresponding to the N uplink data transmission blocks sent before respectively.

In 406, the terminal device performs HARQ retransmission for each uplink data transmission block corresponding to NACK information.

The ACK/NACK information feedback method in the embodiments of the present disclosure is described above in combination with Fig. 1 to Fig. 4 in detail. A terminal device and network side device in the embodiments of the present disclosure will be described below in combination with Fig. 5 to Fig. 8 in detail. It is to be understood that the terminal device and network side device in Fig. 5 to Fig. 8 may execute each operation executed by the terminal device and network side device above and, for avoiding repetitions, will not be elaborated herein.

Fig. 5 is a schematic structure diagram of a terminal device according to an embodiment of the present disclosure. The terminal device 500 shown in Fig. 5 includes:
a sending module 510, configured to send uplink data to a network side device;
a receiving module 520, configured to receive first DCI sent by the network side device, the first DCI including ACK/NACK information corresponding to the uplink data; and
a determination module 530, configured to determine the ACK/NACK information corresponding to the uplink data according to the first DCI received by the receiving module 520.

In the embodiment of the present disclosure, the ACK/NACK information is carried in the DCI, so that the ACK/NACK information may be transmitted in an existing control channel resource, and there is no need to design an independent channel (PHICH) and allocate an independent physical resource for the ACK/NACK information in an LTE system, thereby increasing a resource utilization rate. In addition, a DCI transmission manner is more reliable than a PHICH transmission manner.

According to the invention, the first DCI includes an ACK/NACK information sequence, the ACK/NACK information sequence is formed by multiple pieces of ACK/NACK information and the ACK/NACK information sequence includes the ACK/NACK information corresponding to the uplink data.

In at least one alternative embodiment, the multiple pieces of ACK/NACK information correspond to uplink data transmission of multiple terminal devices respectively, or, the multiple pieces of ACK/NACK information correspond to multiple uplink data transmissions of the terminal device respectively.

In at least one alternative embodiment, the determination module 530 is configured to determine position information of the ACK/NACK information corresponding to the uplink data and determine the ACK/NACK information corresponding to the uplink data in the ACK/NACK information sequence according to the position information.

In at least one alternative embodiment, the receiving module 520 is further configured to receive indication information sent by the network side device. The determination module 530 is configured to determine the position information of the ACK/NACK information corresponding to the uplink data according to the indication information received by the receiving module.

In at least one alternative embodiment, the indication information is carried in RRC signaling or second DCI sent to the terminal device by the network side device, the second DCI being DCI used for scheduling the uplink data.

In at least one alternative embodiment, the determination module 530 is configured to determine the position information of the ACK/NACK information corresponding to the uplink data according to scheduling information of the uplink data, the scheduling information of the uplink data including at least one of: a CCE occupied by DCI used for scheduling the uplink data, a physical resource occupied by the uplink data, and DMRS configuration information of the uplink data.

In an example not falling within the scope of the claims, the determination module 530 is configured to, when the position information is an index of the ACK/NACK information corresponding to the uplink data in the ACK/NACK information sequence, determine the ACK/NACK information corresponding to the uplink data in the ACK/NACK information sequence according to the index.

According to the invention, the determination module 530 is configured to, when the position information is an index of a first bit of the ACK/NACK information corresponding to the uplink data in all bits of the ACK/NACK information sequence, determine the first bit of the ACK/NACK information corresponding to the uplink data in the ACK/NACK information sequence according to the index and determine remaining bits of the ACK/NACK information corresponding to the uplink data in the ACK/NACK information sequence according to a number of bits contained in the ACK/NACK information corresponding to the uplink data.

In at least one alternative embodiment, the number of the bits contained in the ACK/NACK information corresponding to the uplink data is determined according to a maximum number of transmission blocks supported by a single uplink transmission of the terminal device or according to a number of transmission blocks contained in the uplink data.

In at least one alternative embodiment, the number of the bits contained in the ACK/NACK information corresponding to the uplink data is preset.

In at least one alternative embodiment, the number of the bits contained in the ACK/NACK information corresponding to the uplink data is larger than the number of the transmission blocks contained in the uplink data, first-type bits contained in the ACK/NACK information corresponding to the uplink data are used for indicating ACK/NACK information corresponding to transmission blocks contained in the uplink data, and other bits, except the first-type bits, contained in the ACK/NACK information corresponding to the uplink data are fixed values or values same as values of the first-type bits.

In at least one alternative embodiment, the first DCI may further include HARQ time sequence information and the HARQ time sequence information is used for indicating a HARQ retransmission time sequence of the uplink data.

In at least one alternative embodiment, a CRC code of the first DCI is scrambled based on a public RNTI.

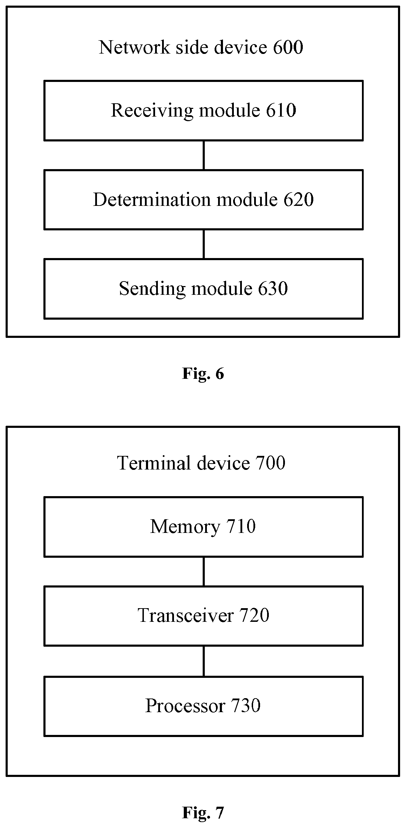

Fig. 6 is a schematic structure diagram of a network side device according to an embodiment of the present disclosure. The network side device 600 shown in Fig. 6 includes:
a receiving module 610, configured to receive uplink data sent by a terminal device;
a determination module 620, configured to determine ACK/NACK information corresponding to the uplink data; and
a sending module 630, configured to send first DCI to the terminal device, the first DCI including the ACK/NACK information corresponding to the uplink data.

In the embodiment of the present disclosure, the ACK/NACK information is carried in the DCI, so that the ACK/NACK information may be transmitted in an existing control channel resource, and there is no need to design an independent channel (PHICH) and allocate an independent physical resource for the ACK/NACK information in an LTE system, thereby increasing a resource utilization rate. In addition, a DCI transmission manner is more reliable than a PHICH transmission manner.

According to the invention, the first DCI includes an ACK/NACK information sequence, the ACK/NACK information sequence is formed by multiple pieces of ACK/NACK information and the ACK/NACK information sequence includes the ACK/NACK information corresponding to the uplink data.

In at least one alternative embodiment, the multiple pieces of ACK/NACK information correspond to uplink data transmission of multiple terminal devices respectively, or, the multiple pieces of ACK/NACK information correspond to multiple uplink data transmissions of the terminal device respectively.

In at least one alternative embodiment, the sending module 630 is further configured to send indication information to the terminal device, the indication information being used for indicating position information of the ACK/NACK information corresponding to the uplink data.

In at least one alternative embodiment, the indication information is carried in RRC signaling or second DCI sent to the terminal device by the network side device, the second DCI being DCI used for scheduling the uplink data.

In at least one alternative embodiment, the sending module 630 is further configured to send scheduling information of the uplink data to the terminal device to enable the terminal device to determine the position information of the ACK/NACK information corresponding to the uplink data according to the scheduling information, the scheduling information of the uplink data including at least one of: a CCE occupied by DCI used for scheduling the uplink data, a physical resource occupied by the uplink data, and DMRS configuration information of the uplink data.

In at least one alternative embodiment, the number of bits contained in the ACK/NACK information corresponding to the uplink data is determined according to a maximum number of transmission blocks supported by a single uplink transmission of the terminal device or according to a number of transmission blocks contained in the uplink data.

In at least one alternative embodiment, the number of the bits contained in the ACK/NACK information corresponding to the uplink data is preset.

In at least one alternative embodiment, the number of the bits contained in the ACK/NACK information corresponding to the uplink data is larger than the number of the transmission blocks contained in the uplink data, first-type bits contained in the ACK/NACK information corresponding to the uplink data are used for indicating ACK/NACK information corresponding to transmission blocks contained in the uplink data, and other bits, except the first-type bits, contained in the ACK/NACK information corresponding to the uplink data are fixed values or values same as values of the first-type bits.

In at least one alternative embodiment, the DCI may further include HARQ time sequence information and the HARQ time sequence information is used for indicating a HARQ retransmission time sequence of the uplink data.

In at least one alternative embodiment, a CRC code of the first DCI is scrambled based on a public RNTI.

Fig. 7 is a schematic structure diagram of a terminal device according to an embodiment of the present disclosure. The terminal device 700 shown in Fig. 7 includes:
a memory 710, configured to store a program;
a transceiver 720, configured to send uplink data,
the transceiver 720 being further configured to receive first DCI sent by the network side device, the first DCI including ACK/NACK information corresponding to the uplink data; and
a processor 730, configured to execute the program stored in the memory 710, the processor 730 being configured to, when the program is executed, determine the ACK/NACK information corresponding to the uplink data according to the first DCI received by a receiving module 520.

In the embodiment of the present disclosure, the ACK/NACK information is carried in the DCI, so that the ACK/NACK information may be transmitted in an existing control channel resource, and there is no need to design an independent channel (PHICH) and allocate an independent physical resource for the ACK/NACK information in an LTE system, thereby increasing a resource utilization rate. In addition, a DCI transmission manner is more reliable than a PHICH transmission manner.

According to the invention, the first DCI includes an ACK/NACK information sequence, the ACK/NACK information sequence is formed by multiple pieces of ACK/NACK information and the ACK/NACK information sequence includes the ACK/NACK information corresponding to the uplink data.

In at least one alternative embodiment, the multiple pieces of ACK/NACK information correspond to uplink data transmission of multiple terminal devices respectively, or, the multiple pieces of ACK/NACK information correspond to multiple uplink data transmissions of the terminal device respectively.

According to the invention, the processor 730 is configured to determine position information of the ACK/NACK information corresponding to the uplink data and determine the ACK/NACK information corresponding to the uplink data in the ACK/NACK information sequence according to the position information.

In at least one alternative embodiment, the transceiver 720 is further configured to receive indication information sent by the network side device. The processor 730 is configured to determine the position information of the ACK/NACK information corresponding to the uplink data according to the indication information received by the receiving module.

In at least one alternative embodiment, the indication information is carried in RRC signaling or second DCI sent to the terminal device by the network side device, the second DCI being DCI used for scheduling the uplink data.

In at least one alternative embodiment, the processor 730 is configured to determine the position information of the ACK/NACK information corresponding to the uplink data according to scheduling information of the uplink data, the scheduling information of the uplink data including at least one of: a CCE occupied by DCI used for scheduling the uplink data, a physical resource occupied by the uplink data, and DMRS configuration information of the uplink data.

In an example not falling within the scope of the claims, the processor 730 is configured to, when the position information is an index of the ACK/NACK information corresponding to the uplink data in the ACK/NACK information sequence, determine the ACK/NACK information corresponding to the uplink data in the ACK/NACK information sequence according to the index.

According to the invention, the processor 730 is configured to, when the position information is an index of a first bit of the ACK/NACK information corresponding to the uplink data in all bits of the ACK/NACK information sequence, determine the first bit of the ACK/NACK information corresponding to the uplink data in the ACK/NACK information sequence according to the index and determine remaining bits of the ACK/NACK information corresponding to the uplink data in the ACK/NACK information sequence according to a number of bits contained in the ACK/NACK information corresponding to the uplink data.

In at least one alternative embodiment, the number of the bits contained in the ACK/NACK information corresponding to the uplink data is determined according to a maximum number of transmission blocks supported by a single uplink transmission of the terminal device or according to a number of transmission blocks contained in the uplink data.

In at least one alternative embodiment, the number of the bits contained in the ACK/NACK information corresponding to the uplink data is preset.

In at least one alternative embodiment, the number of the bits contained in the ACK/NACK information corresponding to the uplink data is larger than the number of the transmission blocks contained in the uplink data, first-type bits contained in the ACK/NACK information corresponding to the uplink data are used for indicating ACK/NACK information corresponding to transmission blocks contained in the uplink data, and other bits, except the first-type bits, contained in the ACK/NACK information corresponding to the uplink data are fixed values or values same as values of the first-type bits.

In at least one alternative embodiment, the first DCI may further include HARQ time sequence information and the HARQ time sequence information is used for indicating a HARQ retransmission time sequence of the uplink data.

In at least one alternative embodiment, a CRC code of the first DCI is scrambled based on a public RNTI.

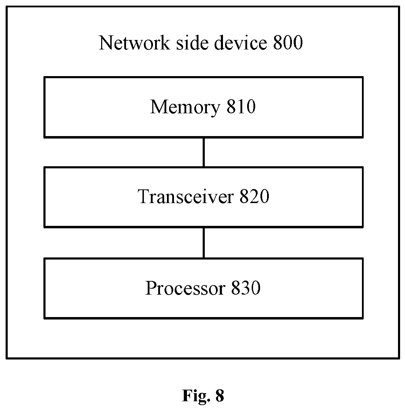

Fig. 8 is a schematic structure diagram of a network side device according to an embodiment of the present disclosure. The network side device 800 shown in Fig. 8 includes:
a memory 810, configured to store a program;
a transceiver 820, configured to receive uplink data sent by a terminal device; and
a processor 830, configured to execute the program stored in the memory 810, the processor 830 being configured to, when the program is executed, determine ACK/NACK information corresponding to the uplink data,
the transceiver 820 being further configured to send first DCI to the terminal device, the first DCI including the ACK/NACK information corresponding to the uplink data.

In the embodiment of the present disclosure, the ACK/NACK information is carried in the DCI, so that the ACK/NACK information may be transmitted in an existing control channel resource, and there is no need to design an independent channel (PHICH) and allocate an independent physical resource for the ACK/NACK information in an LTE system, thereby increasing a resource utilization rate. In addition, a DCI transmission manner is more reliable than a PHICH transmission manner.

According to the invention, the first DCI includes an ACK/NACK information sequence, the ACK/NACK information sequence is formed by multiple pieces of ACK/NACK information and the ACK/NACK information sequence includes the ACK/NACK information corresponding to the uplink data.

In at least one alternative embodiment, the multiple pieces of ACK/NACK information correspond to uplink data transmission of multiple terminal devices respectively, or, the multiple pieces of ACK/NACK information correspond to multiple uplink data transmissions of the terminal device respectively.

In at least one alternative embodiment, the transceiver 820 is further configured to send indication information to the terminal device, the indication information being used for indicating position information of the ACK/NACK information corresponding to the uplink data.

In at least one alternative embodiment, the indication information is carried in RRC signaling or second DCI sent to the terminal device by the network side device, the second DCI being DCI used for scheduling the uplink data.

In at least one alternative embodiment, the transceiver 820 is further configured to send scheduling information of the uplink data to the terminal device to enable the terminal device to determine the position information of the ACK/NACK information corresponding to the uplink data according to the scheduling information, the scheduling information of the uplink data including at least one of: a CCE occupied by DCI used for scheduling the uplink data, a physical resource occupied by the uplink data, and DMRS configuration information of the uplink data.

In at least one alternative embodiment, a number of bits contained in the ACK/NACK information corresponding to the uplink data is determined according to a maximum number of transmission blocks supported by a single uplink transmission of the terminal device or according to a number of transmission blocks contained in the uplink data.

In at least one alternative embodiment, the number of the bits contained in the ACK/NACK information corresponding to the uplink data is preset.

In at least one alternative embodiment, the number of the bits contained in the ACK/NACK information corresponding to the uplink data is larger than the number of the transmission blocks contained in the uplink data, first-type bits contained in the ACK/NACK information corresponding to the uplink data are used for indicating ACK/NACK information corresponding to transmission blocks contained in the uplink data, and other bits, except the first-type bits, contained in the ACK/NACK information corresponding to the uplink data are fixed values or values same as values of the first-type bits.

In at least one alternative embodiment, the DCI may further include HARQ time sequence information and the HARQ time sequence information is used for indicating a HARQ retransmission time sequence of the uplink data.

In at least one alternative embodiment, a CRC code of the first DCI is scrambled based on a public RNTI.

Those of ordinary skill in the art should know that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Those skilled in the art may implement the described functions for each specific application by use of different methods, but such realization shall fall within the scope of the appended claims.

Those skilled in the art should clearly know that specific working processes of the system, device and unit described above may refer to the corresponding processes in the method embodiment and will not be elaborated herein for convenient and brief description.

In some embodiments provided by the application, it is to be understood that the disclosed system, device and method may be implemented in other manners. For example, the device embodiment described above is only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may alternatively be distributed to multiple network units. Part or all of the units may be selected to achieve the purpose of the solutions in the embodiments according to a practical requirement.

In addition, each function unit in each embodiment of the present disclosure may be integrated into a processing unit, each unit may alternatively exist independently, and two or more than two units may alternatively be integrated into a unit.

When being realized in form of software functional unit and sold or used as an independent product, the function may also be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a Read-Only Memory (ROM), a Random Access Memory (RAM), a magnetic disk or an optical disk.

The above are only the exemplary implementations of the present disclosure and are not intended to limit the scope of protection of the present disclosure. Therefore, the scope of protection of the present disclosure shall be subject to the scope of protection of the claims.

## Claims

1. An Acknowledge/Not Acknowledge, ACK/NACK, information feedback method, comprising:
sending (110), by a terminal device, uplink data to a network side device;
receiving (120), by the terminal device, first Downlink Control Information, DCI, sent by the network side device, the first DCI comprising an ACK/NACK information sequence, the ACK/NACK information sequence being formed by multiple pieces of ACK/NACK information corresponding to the uplink data; and
determining, by the terminal device, position information of the multiple pieces of ACK/NACK information corresponding to the uplink data;
the method further comprising:
determining, by the terminal device, the multiple pieces of ACK/NACK information corresponding to the uplink data in the ACK/NACK information sequence according to the position information, wherein determining, by the terminal device, the multiple pieces of ACK/NACK information corresponding to the uplink data in the ACK/NACK information sequence according to the position information comprises: when the position information is an index of a first bit of each piece of ACK/NACK information corresponding to the uplink data in all bits of the ACK/NACK information sequence, determining, by the terminal device, the first bit of each piece of ACK/NACK information corresponding to the uplink data in the ACK/NACK information sequence according to the index; and determining, by the terminal device, remaining bits of each piece of ACK/NACK information corresponding to the uplink data in the ACK/NACK information sequence according to a number of bits contained in each piece of ACK/NACK information corresponding to the uplink data;
determining, by the terminal device, position information of the multiple pieces of ACK/NACK information corresponding to the uplink data according to one of: indication information sent to the terminal device by the network side device, scheduling information for the network side device to schedule the terminal device to send the uplink data.

2. The method as claimed in claim 1, wherein the multiple pieces of ACK/NACK information correspond to uplink data transmission of multiple terminal devices respectively, or, the multiple pieces of ACK/NACK information correspond to multiple uplink data transmissions of the terminal device respectively.

3. The method as claimed in claim 1, wherein the indication information is carried in Radio Resource Control, RRC, signaling or second DCI sent to the terminal device by the network side device, the second DCI being DCI used for scheduling the uplink data.

4. The method as claimed in claim 1, wherein the scheduling information of the uplink data comprising at least one of:
a Control Channel Element, CCE, occupied by DCI used for scheduling the uplink data,
a physical resource occupied by the uplink data, and
Demodulation Reference Signal, DMRS, configuration information of the uplink data.

5. The method as claimed in any one of claims 1 to 4, wherein
a number of bits contained in the ACK/NACK information corresponding to the uplink data is determined according to a maximum number of transmission blocks supported by a single uplink transmission of the terminal device or according to a number of transmission blocks contained in the uplink data;
or,
a number of bits contained in the ACK/NACK information corresponding to the uplink data is preset.

6. The method as claimed in any one of claims 1 to 5, wherein a number of bits contained in the ACK/NACK information corresponding to the uplink data is larger than the number of the transmission blocks contained in the uplink data, first-type bits contained in the ACK/NACK information corresponding to the uplink data are used for indicating ACK/NACK information corresponding to transmission blocks contained in the uplink data, and other bits, except the first-type bits, contained in the ACK/NACK information corresponding to the uplink data are fixed values or values same as values of the first-type bits.

7. The method as claimed in any one of claims 1 to 6, wherein a Cyclic Redundancy Check, CRC, code of the first DCI is scrambled based on a public Radio Temporary Network Identifier, RNTI.

8. An Acknowledge/Not Acknowledge, ACK/NACK, information feedback method, comprising:
receiving (210), by a network side device, uplink data sent by a terminal device;
determining (220), by the network side device, multiple pieces of ACK/NACK information corresponding to the uplink data; and
sending (230), by the network side device, first Downlink Control Information, DCI, to the terminal device, the first DCI comprising an ACK/NACK information sequence, the ACK/NACK information sequence being formed by the multiple pieces of ACK/NACK information corresponding to the uplink data;
the method further comprising: sending, by the network side device, indication information or scheduling information used for determining position information of the multiple pieces of ACK/NACK information corresponding to the uplink data, wherein the scheduling information is information for the network side device to schedule the terminal device to send the uplink data, the position information is an index of a first bit of each piece of ACK/NACK information corresponding to the uplink data in all bits of the ACK/NACK information sequence, the position information enables the terminal device to determine the first bit of each piece of ACK/NACK information corresponding to the uplink data in the ACK/NACK information sequence according to the index and determine remaining bits of each piece of ACK/NACK information corresponding to the uplink data in the ACK/NACK information sequence according to a number of bits contained in each piece of ACK/NACK information corresponding to the uplink data.

9. A terminal device (500), comprising: a memory and a processor, the memory comprising instructions which, when executed by the processor, cause the processor to carry out the method as claimed in any one of claims 1 to 7.

10. A network side device (600), comprising: a memory and a processor, the memory comprising instructions which, when executed by the processor, cause the processor to carry out the method as claimed in claim 8.

11. A computer-readable storage medium comprising instructions which, when executed by a computer, cause the computer to carry out the method as claimed in any one of claims 1 to 7.

12. A computer-readable storage medium comprising instructions which, when executed by a computer, cause the computer to carry out the method as claimed in claim 8.

## Patentansprüche

1. ACK/NACK(Acknowledge/Not Acknowledge)-Informationsrückkopplungsverfahren, umfassend:
Senden (110), durch eine Endgerätevorrichtung ist, von Uplinkdaten an eine netzwerkseitige Vorrichtung;
Empfangen (120), durch die Endgerätevorrichtung, von ersten Downlink-Steuerinformationen, DCI, die von der netzwerkseitigen Vorrichtung gesendet werden, wobei die ersten DCI eine ACK/NACK-Informationssequenz umfassen, wobei die ACK/NACK-Informationssequenz aus mehreren ACK/NACK-Informationen, die den Uplinkdaten entsprechen, gebildet wird; und
Bestimmen, durch die Endgerätevorrichtung, von Positionsinformationen der mehreren Stücke von ACK/NACK-Informationen, die den Uplinkdaten entsprechen; wobei das Verfahren ferner umfasst:
Bestimmen, durch die Endgerätevorrichtung, der mehreren ACK/NACK-Informationen, die den Uplinkdaten in der ACK/NACK-Informationssequenz entsprechen, gemäß den Positionsinformationen, wobei das Bestimmen, durch die Endgerätevorrichtung, der mehreren ACK/NACK-Informationen, die den Uplinkdaten in der ACK/NACK-Informationssequenz entsprechen, gemäß den Positionsinformationen umfasst: wenn die Positionsinformation ein Index eines ersten Bits von jeder ACK/NACK-Information ist, die den Uplinkdaten in allen Bits der ACK/NACK-Informationssequenz entspricht, Bestimmen, durch die Endgerätevorrichtung, des ersten Bits von jeder ACK/NACK-Information, die den Uplinkdaten in der ACK/NACK-Informationssequenz entspricht, gemäß dem Index; und Bestimmen, durch die Endgerätevorrichtung, der verbleibenden Bits jeder ACK/NACK-Information, die den Uplinkdaten entspricht, in der ACK/NACK-Informationssequenz gemäß einer Anzahl von Bits, die in jeder ACK/NACK-Information enthalten sind, die den Uplinkdaten entspricht;
Bestimmen, durch die Endgerätevorrichtung, von Positionsinformationen der mehreren ACK/NACK-Informationen, die den Uplinkdaten entsprechen, gemäß Angabeinformationen, die durch die netzwerkseitige Vorrichtung an die Endgerätevorrichtung gesendet werden, oder Planungsinformationen für die netzwerkseitige Vorrichtung, um die Netzwerkvorrichtung für das Senden der Uplinkdaten zu planen.

2. Verfahren nach Anspruch 1, wobei die mehreren ACK/NACK-Informationen jeweils der Übertragung von Uplinkdaten mehrerer Endgerätevorrichtungen entsprechen, oder die mehreren ACK/NACK-Informationen jeweils der Übertragung von Uplinkdaten der Endgerätevorrichtung entsprechen.

3. Verfahren nach Anspruch 1, wobei die Angabeinformationen in der Radio Resource Control, RRC, Signalisierung oder in den zweiten DCI, die durch die netzwerkseitige Vorrichtung an die Endgerätevorrichtung gesendet werden, übertragen wird, wobei die zweiten DCI DCI sind, die für die Planung der Uplinkdaten verwendet werden.

4. Verfahren nach Anspruch 1, wobei die Planungsinformationen der Uplinkdaten umfassen:
ein Control Channel Element, CCE, das durch DCI belegt ist und zur Planung der Uplinkdaten verwendet wird, und/oder
eine physikalische Ressource, die von den Uplinkdaten belegt wird, und/oder
"Demodulation Reference Signal", DMRS,-Konfigurationsinformationen der Uplinkdaten.

5. Verfahren nach einem der Ansprüche 1 bis 4, wobei eine Anzahl von Bits, die in den ACK/NACK-Informationen enthalten sind, die den Uplinkdaten entsprechen, gemäß einer maximalen Anzahl von Übertragungsblöcken bestimmt wird, die durch eine einzelne Uplinkübertragung der Endgerätevorrichtung unterstützt werden, oder gemäß einer Anzahl von Übertragungsblöcken, die in den Uplinkdaten enthalten sind;
oder,
eine Anzahl von Bits, die in den ACK/NACK-Informationen enthalten sind, die den Uplinkdaten entsprechen, voreingestellt ist.

6. Verfahren nach einem der Ansprüche 1 bis 5, wobei eine Anzahl von Bits, die in den ACK/NACK-Informationen, die den Uplinkdaten entsprechen, enthalten sind, größer ist als die Anzahl der Übertragungsblöcke, die in den Uplinkdaten enthalten sind, Bits vom ersten Typ, die in den ACK/NACK-Informationen, die den Uplinkdaten entsprechen, enthalten sind, zum Angeben von ACK/NACK-Informationen, die Übertragungsblöcken entsprechen, die in den Uplinkdaten enthalten sind, verwendet werden, und andere Bits, mit Ausnahme der Bits vom ersten Typ, die in den ACK/NACK-Informationen, die den Uplinkdaten entsprechen, enthalten sind, feste Werte oder Werte sind, die den Werten der Bits vom ersten Typ entsprechen.

7. Verfahren nach einem der Ansprüche 1 bis 6, wobei ein "Cyclic Redundancy Check", CRC, -Code der ersten DCI basierend auf einem öffentlichen "Radio Temporary Network" Identifikator, RNTI, verwürfelt wird.

8. ACK/NACK(Acknowledge/Not Acknowledge)-Informationsrückkopplungsverfahren, umfassend:
Empfangen (210), durch eine netzwerkseitige Vorrichtung, von Uplinkdaten, die durch eine Endgerätevorrichtung gesendet werden;
Bestimmen (220), durch die netzwerkseitige Vorrichtung, mehrerer ACK/NACK-Informationen, die den Uplinkdaten entsprechen; und
Senden (230), durch die netzwerkseitige Vorrichtung, von ersten Downlink-Steuerinformationen, DCI, an die Endgerätevorrichtung, wobei die ersten DCI eine ACK/NACK-Informationssequenz umfassen, wobei die ACK/NACK-Informationssequenz durch die mehreren ACK/NACK-Informationen, die den Uplinkdaten entsprechen, gebildet wird;
wobei das Verfahren ferner umfasst:
Senden, durch die netzwerkseitige Vorrichtung, von Angabeinformationen oder Planungsinformationen, die zum Bestimmen von Positionsinformationen der mehreren ACK/NACK-Informationen, die den Uplinkdaten entsprechen, verwendet werden, wobei die Planungsinformationen Informationen für die netzwerkseitige Vorrichtung sind, um die Endgerätevorrichtung für das Senden der Uplinkdaten zu planen, wobei die Positionsinformationen ein Index eines ersten Bits jeder ACK/NACK-Information, die den Uplinkdaten in allen Bits der ACK/NACK-Informationssequenz entspricht, die Positionsinformationen es der Endgerätevorrichtung ermöglichen, das erste Bit jeder ACK/NACK-Information, die den Uplinkdaten in der ACK/NACK-Informationssequenz gemäß dem Index entspricht, und die verbleibenden Bits jeder ACK/NACK-Information, die den Uplinkdaten entspricht, in der ACK/NACK-Informationssequenz gemäß einer Anzahl von Bits zu bestimmen, die in jeder ACK/NACK-Information enthalten sind, die den Uplinkdaten entspricht.

9. Endgerätvorrichtung (500), umfassend: einen Speicher und einen Prozessor, wobei der Speicher Befehle umfasst, die, wenn sie vom Prozessor ausgeführt werden, den Prozessor veranlassen, das Verfahren nach einem der Ansprüche 1 bis 7 durchzuführen.

10. Netzwerkseitige Vorrichtung (600), umfassend: einen Speicher und einen Prozessor, wobei der Speicher Befehle umfasst, die, wenn sie vom Prozessor ausgeführt werden, den Prozessor veranlassen, das Verfahren nach Anspruch 8 durchzuführen.

11. Computerlesbares Speichermedium, umfassend Befehle, die, wenn sie von einem Computer ausgeführt werden, den Computer veranlassen, das Verfahren nach einem der Ansprüche 1 bis 7 durchzuführen.

12. Computerlesbares Speichermedium, umfassend Befehle, die, wenn sie von einem Computer ausgeführt werden, den Computer veranlassen, das Verfahrens nach Anspruch 8 durchzuführen.

## Revendications

1. Procédé de renvoi d'informations d'accusé de réception/non-accusé de réception, ACK/NACK, comprenant :
l'envoi (110), par un dispositif terminal, de données de liaison montante à un dispositif côté réseau ;
la réception (120), par le dispositif terminal, de premières informations de commande de liaison descendante, DCI, envoyées par le dispositif côté réseau, les premières DCI comprenant une séquence d'informations ACK/NACK, la séquence d'informations ACK/NACK étant formée par de multiples éléments d'informations ACK/NACK correspondant aux données de liaison montante ; et
la détermination, par le dispositif terminal, d'informations de position des multiples éléments d'informations ACK/NACK correspondant aux données de liaison montante ;
le procédé comprenant en outre :
la détermination, par le dispositif terminal, des multiples éléments d'informations ACK/NACK correspondant aux données de liaison montante dans la séquence d'informations ACK/NACK en fonction des informations de position, la détermination, par le dispositif terminal, des multiples éléments d'informations ACK/NACK correspondant aux données de liaison montante dans la séquence d'informations ACK/NACK en fonction des informations de position comprenant : quand les informations de position sont un indice d'un premier bit de chaque élément d'information ACK/NACK correspondant aux données de liaison montante dans tous les bits de la séquence d'informations ACK/NACK, la détermination, par le dispositif terminal, du premier bit de chaque élément d'information ACK/NACK correspondant aux données de liaison montante dans la séquence d'informations ACK/NACK en fonction de l'indice ; et la détermination, par le dispositif terminal, des bits restants de chaque élément d'information ACK/NACK correspondant aux données de liaison montante dans la séquence d'informations ACK/NACK en fonction du nombre de bits contenu dans chaque élément d'information ACK/NACK correspondant aux données de liaison montante ;
la détermination, par le dispositif terminal, d'informations de position des multiples éléments d'informations ACK/NACK correspondant aux données de liaison montante en fonction d'informations d'indication envoyées au dispositif terminal par le dispositif côté réseau, ou d'informations de programmation permettant au dispositif côté réseau de programmer le dispositif terminal pour envoyer les données de liaison montante.

2. Procédé selon la revendication 1, dans lequel les multiples éléments d'informations ACK/NACK correspondent à une transmission de données de liaison montante de multiples dispositifs terminaux respectivement, ou, les multiples éléments d'informations ACK/NACK correspondent respectivement à de multiples transmissions de données de liaison montante du dispositif terminal.

3. Procédé selon la revendication 1, dans lequel les informations d'indication sont incluses dans une signalisation de commande de ressources radio, RRC, ou des secondes DCI envoyées au dispositif terminal par le dispositif côté réseau, les secondes DCI étant des DCI servant à programmer les données de liaison montante.

4. Procédé selon la revendication 1, dans lequel les informations de programmation des données de liaison montante comprennent au moins :
un élément de canal de commande, CCE, occupé par des DCI servant à programmer les données de liaison montante,
une ressource physique occupée par les données de liaison montante, et
des informations de configuration de signal de référence de démodulation, DMRS, des données de liaison montante.

5. Procédé selon l'une quelconque des revendications 1 à 4, dans lequel
un nombre de bits contenu dans les informations ACK/NACK correspondant aux données de liaison montante est déterminé en fonction d'un nombre maximum de blocs de transmission pris en charge par une seule transition de liaison montante du dispositif terminal ou en fonction d'un nombre de blocs de transmission contenu dans les données de liaison montante ;
ou,
un nombre de bits contenu dans les informations ACK/NACK correspondant aux données de liaison montante est prédéfini.

6. Procédé selon l'une quelconque des revendications 1 à 5, dans lequel un nombre de bits contenu dans les informations ACK/NACK correspondant aux données de liaison montante est supérieur au nombre de blocs de transmission contenu dans les données de liaison montante, des bits d'un premier type, contenus dans les informations ACK/NACK correspondant aux données de liaison montante, servent à indiquer des informations ACK/NACK correspondant à des blocs de transmission contenus dans les données de liaison montante, et d'autres bits, à l'exception des bits du premier type, contenus dans les informations ACK/NACK correspondant aux données de liaison montante, sont des valeurs fixes ou des valeurs identiques à des valeurs des bits du premier type.

7. Procédé selon l'une quelconque des revendications 1 à 6, dans lequel un code de contrôle de redondance cyclique, CRC, des premières DCI est brouillé sur la base d'un identifiant de réseau temporaire radio, RNTI, public.

8. Procédé de renvoi d'informations d'accusé de réception/non-accusé de réception, ACK/NACK, comprenant :
la réception (210), par un dispositif côté réseau, de données de liaison montante envoyées par un dispositif terminal ;
la détermination (220), par le dispositif côté réseau, de multiples éléments d'informations ACK/NACK correspondant aux données de liaison montante ; et
l'envoi (230), par le dispositif côté réseau, de premières informations de commande de liaison descendante, DCI, au dispositif terminal, les premières DCI comprenant une séquence d'informations ACK/NACK, la séquence d'informations ACK/NACK étant formée par les multiples éléments d'informations ACK/NACK correspondant aux données de liaison montante ;
le procédé comprenant en outre :
l'envoi, par le dispositif côté réseau, d'informations d'indication ou d'informations de programmation servant à déterminer des informations de position des multiples éléments d'informations ACK/NACK correspondant aux données de liaison montante, les informations de programmation étant des informations permettant au dispositif côté réseau de programmer le dispositif terminal pour envoyer les données de liaison descendante, les informations de position étant un indice d'un premier bit de chaque élément d'information ACK/NACK correspondant aux données de liaison montante dans tous les bits de la séquence d'informations ACK/NACK, les informations de position permettant au dispositif terminal de déterminer le premier bit de chaque élément d'information ACK/NACK correspondant aux données de liaison montante dans la séquence d'informations ACK/NACK en fonction de l'indice et de déterminer des bits restants de chaque élément d'information ACK/NACK correspondant aux données de liaison montante dans la séquence d'informations ACK/NACK en fonction d'un nombre de bits contenu dans chaque élément d'information ACK/NACK correspondant aux données de liaison montante.

9. Dispositif terminal (500), comprenant : une mémoire et un processeur, la mémoire étant configurée pour mémoriser des instructions qui, à leur exécution par le processeur, amènent le processeur à réaliser le procédé selon l'une quelconque des revendications 1 à 7.

10. Dispositif côté réseau (600), comprenant : une mémoire et un processeur, la mémoire comprenant des instructions qui, à leur exécution par le processeur, amènent le processeur à réaliser le procédé selon la revendication 8.

11. Support de mémorisation lisible par ordinateur comprenant des instructions qui, à leur exécution par un ordinateur, amènent l'ordinateur le procédé selon l'une quelconque des revendications 1 à 7.

12. Support de mémorisation lisible par ordinateur comprenant des instructions qui, à leur exécution par un ordinateur, amènent l'ordinateur le procédé selon la revendication 8.
